(19) **Europäisches Patentamt**

**European Patent Office**

**Office européen des brevets**

(11) **EP 0 813 976 B1**

(12) **EUROPÄISCHE PATENTSCHRIFT**

(45) Veröffentlichungstag und Bekanntmachung des Hinweises auf die Patenterteilung:
**03.01.2001 Patentblatt 2001/01**

(51) Int Cl.[7]: **B41M 1/10**, B41M 7/00, C09D 11/10

(21) Anmeldenummer: **97890110.6**

(22) Anmeldetag: **19.06.1997**

(54) **Tiefdruckverfahren unter Anwendung eines mit Wasser verdünnbaren Druckfarbensystems**

Intaglio printing process using a water-dilutable printing ink

Procédé d'impression par héliogravure avec encre diluable à l'eau

(84) Benannte Vertragsstaaten:
**AT DE ES FR GB IT**

(30) Priorität: **20.06.1996 AT 109596**

(43) Veröffentlichungstag der Anmeldung:
**29.12.1997 Patentblatt 1997/52**

(73) Patentinhaber: **TEICH AKTIENGESELLSCHAFT**
**3200 Obergrafendorf (AT)**

(72) Erfinder:
• **Haschke, Heinz, Dr.**
**2542 Kottingbrunn (AT)**
• **Ullrich, Thomas, Dipl.-Ing.**
**3200 Obergrafendorf (AT)**
• **Veit, Werner, Ing.**
**1160 Wien (AT)**

(74) Vertreter: **Dungler, Karin et al**
**c/o Patentanwälte**
**Dipl.-Ing. Manfred Beer und**
**Dipl.-Ing. Reinhard Hehenberger**
**Postfach 264**
**1071 Wien (AT)**

(56) Entgegenhaltungen:
**EP-A- 0 562 860     EP-A- 0 686 509**
**CH-A- 682 315     US-A- 5 367 005**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Technisches Gebiet

Die Erfindung betrifft ein Verfahren zur Herstellung von nach dem Rotationstiefdruckverfahren bedruckten Substraten.

Stand der Technik

Es ist bekannt, bei Bedarf hoher Druckgeschwindigkeiten das zu bedruckende Substrat nach dem Rotationstiefdruckverfahren zu bedrucken. Die bei diesem Verfahren eingesetzte'Druckform besteht aus einem verchromten Kupferzylinder, welcher an seiner Oberfläche Vertiefungen (Näpfchen) aufweist. Diese sind in die metallische Druckwalze eingraviert und dienen zur Aufnahme der Druckfarbe. Beim Abrollen der Druckwalze werden die Näpfchen entleert, sodaß die Druckfarbe auf das Substrat aufgetragen wird.

Durch die Wahl unterschiedlicher Näpfchentiefen ($t_N$ [μm]) bei der Prägung bzw. bei der Ätzung des Tiefdruck (TD)-Zylinders kann die Dicke der Farbschicht, welche am jeweiligen Bildpunkt aufgetragen werden soll, präzise gesteuert werden. Aufgrund des Flankenwinkels der verwendeten Prägewerkzeuge, welche in der Regel pyramidenförmige Diamantstichel darstellen, ist mit deren Eindringtiefe beim Prägevorgang mit der Tiefe der so entstehenden Näpfchen automatisch auch deren Basiskantenlänge bestimmt. D.h. tiefe Näpfchen haben dann auch eine größere Basiskantenlänge und damit auch eine größere Basisfläche ($F_N$ [μm$^2$]); d.h. die bei deren Entleerung auf dem bedruckten Substrat entstehenden Farbpunkte sind nicht nur dicker, sondern erfüllen auch zu einem größeren Prozentsatz die Fläche der für den jeweiligen Farbpunkt maximal vorgesehenen Rasterpunkt-Fläche.

Durch die damit erreichte, variabel wählbare Substratdeckung können - neben der Farbkraft der einzelnen Farbpunkte über deren Dicke - auch der makroskopisch visuelle Farbeindruck gesteuert werden, beispielsweise bei Verwendung einer weißen Druckfarbe: von reinweiß bis grau. Durch die Kombination von Druckfarben-Konzentrationseinstellung und variabler Näpfchentiefe bzw. Näpfchen-Basisfläche können auch kontinuierlich verlaufende Farbübergänge und Druckbilder dargestellt werden.

Analoges kann auch bei geätzten TD-Zylindern durch geeignete Ätztechnik erreicht werden.

In der Regel werden TD-Zylinder hergestellt durch Gravierung oder Ätzung in relativ weiches, gut gravierbares Metall (z.B. Kupfer) und anschließende Hartverchromung des gravierten Zylinders zur Erhöhung seiner Abriebfestigkeit und damit Standzeit im Druckverfahren. Dabei werden Zylinder und Näpfchen mit einer praktisch einheitlich dünnen Cr-Schicht überzogen. TD-Zylinder-Herstellverfahren, bei denen ein ungravierter Zylinder zuerst mit einer dickeren Verchromungsschicht überzogen wird und dann die Näpfchen in diese Cr-Schicht geätzt werden, sind wesentlich nachteiliger, da die naturgemäß mikro-rissige Cr-Schicht Unterwanderungen zuläßt und damit unpräzise Näpfchenausbildung bei deren Ätzung bewirkt. Die Näpfchentiefe und damit das Druckfarben aufnehmende Volumen können somit bestimmt werden durch: $v_N$ [μm$^3$] = $t_N$x$F_N$/3 [μm$^3$]; 1μm$^3$ = 10$^{-9}$μl). Es ist drucktechnisch besonders günstig, wenn $v_N$ bzw. $t_N$ je nach gewünschtem Farbeffekt variiert werden können. Die durch Entleerung eines Näpfchens des Volumens $v_N$ auf das Substrat mit einer Fläche $F_N$ aufgetragene Druckfarbenmenge mit einer Konzentration der Druckfarbe an nichtflüchtigen Inhaltsstoffen - das ist die Farbmittel/Bindemittel-Konzentration $c_{FB}$ [Konzentrations-%] (Gramm Farbmittel+Bindemittel pro 100 ml Druckfarbe) entspricht einem "Farbmittel"-Flächengewicht von

$$FG_{FB}[mg_{Farbmittel+Bindemittel}/cm^2_{Substrat}] = c_{FB}[Konz\text{-}\%] \times t_N[\mu m]/3000. \qquad (1)$$

Ein hohes Flächengewicht bedeutet aber auch nach

$$d\ [\mu m] = 10 \times FG_{FB}/\rho_{FB} \qquad (2)$$

mit $\rho_{FB}$ [g/cm$^3$] = die Dichte des nichtflüchtigen Pigment-Bindemittelgemisches, das beim Druck auf dem Substrat bleibt, eine hohe Pigmentschichtdicke und damit nach dem Lambert-Beer'schen Gesetz eine hohe farbliche Deckung. (Unter Farbmittel sollen verstanden werden: Farbpigmente, aber auch lösliche Farbstoffe).

Dringt beispielsweise der Gravur-Stichel tief (d.h. in Größenordnungen von 25 μm) in die TD-Zylinderoberfläche ein, so werden großvolumige Näpfchen erzeugt, die dann auch viel Druckfarbe aufnehmen und - entsprechend dem Winkel der Erzeugenden der Stichelspitze zu deren Basisfläche auch der Eindringtiefe gemäß, große Basiskantenlängen aufweisen, die bis zur gesamten Seitenlänge des Rasterpunktes gehen können. Die von solchen Näpfchen beim Druckvorgang abgegebenen Druckfarbenmengen sind dadurch relativ groß und bis über die gesamte Rasterpunktfläche verteilt. Durch diese relativ große Druckfarbenmenge wird in diesem Fall außerdem ein relativ hohes Flächengewicht auf das Substrat übertragen. (Beispielsweise bei Anwendung einer herkömmlichen Lösungsmittel-basierten Druckfarbe mit 70 Gew.% Lösungsmittelanteil und einer mittleren Druckfarbendichte von 1,05 g/cm$^3$, also einem $C_{FB}$=30x1,05 = 31,5 Konz-% ergäbe sich nach (1) ein "Farbmittel"-Flächengewicht auf dem Substrat von 31,5x25/3000 = 0,26 mg/cm$^2$ bzw. nach (2) und mit einer Farbmittel-Bindemittel-Gemisch-Dichte von 1,4 g/cm$^3$ eine "Farbmittel"-Schichtdicke von d = 10x0,26/1,4 = 1,9 µm.

Bei Verwendung einer sogenannten Lösungsmittel-freien Druckfarbe, bei welcher das organische Lösungs- und Verdünnungsmittel weitgehend weggelassen wurde und nur teilweise durch sogenannte Reaktivverdünner als Lösungs- und Verdünnungsmittel ersetzt wurde, welche Druckfarbe somit beispielsweise eine 95 %-ige Konzentration an nicht-flüchtigen Bestandteilen (FarbmittelKonzentration plus Bindemittel+Reaktivverdünner) aufweist, würde das Erreichen der gleichen Druckfarben-Schichtdicke auf dem Substrat erforderlich machen, daß bei d von rund 2 µm und nach (2) bei $FG_{FB}$ = 0,26 mg/cm$^2$ nach (1) nur mehr mit Näpfchentiefen von 0,26/95x3000 = rund 8 µm (statt der oben genannten 25 µm) gearbeitet werden darf.

Werden blasse Farbtöne gewünscht, so kann bei herkömmlichen Farben entweder die Druckfarbe beliebig mit Lösungsmittel verdünnt werden und/oder der Gravur-Stichel wird nur sehr wenig (d.h. in Größenordnungen von 5 µm) in das Substrat eindringend angewendet bzw. wird die Ätzung nur zu geringen Tiefen vordringen gelassen. Es werden dann sehr seichte, nur wenig Druckfarbe aufnehmende Näpfchen erzeugt, die außerdem eine relativ geringe Kantenlänge aufweisen im Vergleich zur Größe des Rasterpunktes. Als Resultat ergibt sich ein Druckbild mit relativ geringem Flächengewicht, d.h. relativ dünner Farbmittelschicht auf dem zu bedruckenden Substrat, und außerdem können die so gedruckten Farbpunkte auch noch unbedruckte Zwischenräume im Rahmen der Rasterpunktgröße offen lassen, sodaß mit dem freien Auge betrachtet, eine sehr wenig deckende Fläche bzw. ein sehr zarter Farbton realisiert werden kann. Im vorgenannten Beispiel würde die herkömmliche Druckfarbe mit einer Farbmittelkonzentration von $c_F$ = 31,5 Konz-% somit nach (1) ein Farbmittel-Flächengewicht auf dem Substrat von 0,05 mg/cm$^2$ erbringen, also nach (2) eine Farbmittel-Schichtdicke von rund 0,4 µm. Bei Anwendung der vorgenannten, sogenannten Lösungsmittel-freien Druckfarbe mit $C_{FB}$ = 95 Konz-% und einem Ziel gleicher Farbmittel-Schichtdicke würde das aber bedeuten, daß die Näpfchentiefe nicht mehr als 0,05/95x3000 = 1,6 µm betragen darf.

Bei so geringen Gravur- und Ätztiefen ist bereits die Grundrauhigkeit des jeweils verwendete TD-Zylindermaterials als limitierend zu berücksichtigen - oder anders ausgedrückt, nachdem Grundrauhigkeiten um 0,5 µm auch bei bester Zylindervorbehandlung (durch Polieren, Hart-Hochglanzverchromung etc.) kaum zu unterschreiten sind, sind dadurch solche lösungsmittelfreie, konzentrierte Druckfarben zusätzlich zu deren Viskositätsproblematik auch dadurch praktisch kaum anwendbar. Oder man nimmt in Kauf, daß immer nur TD-Zylinder mit konstanten Näpfchentiefen angewendet werden dürfen. Dadurch verzichtet man aber auf ein wesentliches drucktechnisches Gestaltungselement.

Um nun auch Näpfchen mit großem Volumen problemlos füllen und deren vollständige Entleerung unter reproduzierbarer Druckfarbenübertragung auf das zu bedruckende Substrat bewirken zu können, ist es notwendig beim Rotationstiefdruckverfahren - im Gegensatz zum Offset- bzw. zum Flexodruckverfahren - niedrigviskose Druckfarbensysteme einzusetzen.

Herkömmlich verwendet man daher Druckfarbensysteme in Form von Dispersionen oder Suspensionen bestehend aus Farbmitteln, Bindemitteln und organischen Lösungsmitteln. Der Lösungsmittelanteil beträgt dabei etwa 70 Gew.-%, sodaß das Farbmittel/Bindemittelsystem in relativ niedriger Konzentration vorliegt. Die eingesetzten Lösungsmittel sind Ketone, wie Methylethylketon, Alkohole, Ester oder aromatische Kohlenwasserstoffe wie Toluol.

Da der Einsatz von organischen Lösungsmitteln zu Entsorgungsproblemen führen kann werden gemäß der EP-A-562 860 Wasser-lösliche Strahlungs-härtbare veresterte Epoxy-Oligomere vorgeschlagen, welche in Lacken eingesetzt werden könen. Gemäß der US-A-5,429,841 ist es ferner versucht worden, den Lösungsmittelanteil auch in Druckfarbensystemen zu verringern. Dabei wird ein Anteil an organischem Lösungsmittel durch Wasser ersetzt, wobei eine Druckfarben-hältige Emulsion eines mit Wasser nicht mischbaren organischen Lösungsmittels eingesetzt wird. Allerdings enthalten diese Druckfarbensysteme immer noch relativ hohe Anteile an Lösungsmitteln, sodaß weiterhin Entsorgungsprobleme auftreten können.

Gemäß der EP-A-686 509 wird daher ein Lösungsmittel-freies Tiefdruckfarbensystem vorgeschlagen. Um dennoch die für die Verfahrensführung ausreichende geringe Viskosität des Druckfarbensystems zu erreichen, werden Reaktivverdünner eingesetzt. Diese gehen einerseits im Druckfarbensystem eine chemische Reaktion unter Bildung Bindemittel-unterstützender Polymerer ein und bewirken andererseits in physikalischer Hinsicht eine Verdünnung. Die Eigenschaft dieser Reaktivverdünner als Lösungsmittel zu wirken, geht somit erst verloren, wenn das System getrocknet wird, wobei durch chemische Reaktion der monomere Reaktivverdünner in das entsprechende Polymer umgewandelt wird. Auch in diesem Fall wird das Verdünnungsmittel bei der Trocknung aus der Druckfarbenformulierung entfernt. Bei herkömmlichen Druckfarben wird das (nicht reaktive) Verdünnungsmittel ebenfalls entfernt, allerdings durch einen physikalischen Vorgang, nämlich durch Verdampfen.

Diese Reaktivverdünner sind niedrig molekulare Flüssigkeiten, die neben polaren Gruppen, welche ihre Eigenschaften als Lösungsmittel hervorrufen, auch funktionelle, polymerisierbare Gruppen enthalten. Durch die Lösungsmitteleigenschaften der eingesetzten Reaktivverdünner wird die Viskosität im Druckfarbensystem zwar vermindert, doch ist diese Wirkung bei weitem nicht so effektiv wie bei einfachen Lösungsmitteln, da Reaktivverdünner, um reaktiv zu sein, eine kompliziertere Molekülkonfiguration aufweisen müssen. Wird der Anteil an Reaktivverdünner zu sehr erhöht, um doch den gewünschten viskositätserniedrigenden Effekt zu erzeugen, so führt dies, da der Reaktivverdünner in auspolymerisierter Form im System verbleibt, zu einer unerwünschten Verdünnung der Farbmittel, welche nach dem Trocknungsprozeß auf dem Substrat aufgebracht sind. Ferner wird die Schichtdicke auf dem bedruckten Substrat durch die ausgebildeten Polymere in unerwünschter Weise erhöht.

Es wurde daher gemäß der EP-A-686 509 vorgeschlagen, höher konzentrierte Druckfarben im Vergleich zu den auf herkömmlichen Lösungsmitteln basierenden Druckfarbensysteme einzusetzen und dabei - um trotzdem noch vernünftige Flächengewichte nach dem Druckvorgang auf dem Substrat realisieren zu können - die Näpfchentiefe während des Druckvorgangs konstant zu halten. Es wird daher bei diesem Verfahren auf einen wesentlichen Freiheitsgrad des Tiefdruckverfahrens, nämlich die Variation der Näpfchentiefe verzichtet.

Aufgabe der Erfindung ist es daher, ein umweltfreundliches Rotationstiefdruckverfahren mit zufriedenstellender Druckqualität anzugeben, bei welchem beliebige Substrate bedruckt werden können und der Freiheitsgrad hinsichtlich variabler Näpfchentiefe am Tiefdruckzylinder erhalten bleibt. Ferner soll eine sichere und rasche Trocknung des Druckfarbensystems gewährleistet werden.

Darstellung der Erfindung

Erfindungsgemäß wird ein Rotationstiefdruckverfahren der eingangs genannten Art vorgeschlagen, welches dadurch gekennzeichnet ist, daß ein wasserverdünnbares Druckfarbensystem eingesetzt wird, welches 2 - 30 Gew.-%, vorzugsweise 5 - 20 Gew-% Farbmittel, 5 - 45 Gew-%, vorzugsweise 10 - 35 Gew-% eines Bindemittelsystems, welches durch aktinische Strahlung polymerisierbar ist, 0 - 10 Gew-%, vorzugsweise 1 - 5 Gew-% radikalische und/ oder kationische Photoinitiatoren sowie 0 - 5 Gew.-%, vorzugsweise 0,5 - 3 Gew.-% Zusatzstoffe sowie 0 - 10 Gew.-%, vorzugsweise 0 Gew.-% Co-Löser sowie zusätzlich Wasser enthält, und daß dieses wasserverdünnbare Druckfarbensystem mittels eines gravierten oder geätzten Tiefdruckzylinders, dessen für die Farbaufnahme vorgesehenen Näpfchen in ihrer Größe und Tiefe dem jeweils gewünschten Druckbild und der eingestellten Farbmittel/ Bindemittel-Konzentration-Verhältnis angepaßt sind, auf das zu bedruckende Substrat aufgebracht wird, daß anschließend das aufgetragene Druckfarbensystem durch Strahlungsquellen unter Polymerisation des Bindemittels getrocknet wird, sodaß gegebenenfalls auf die erste Druck-farbenschicht unmittelbar eine zweite Druckfarbenschicht aufgetragen werden kann.

Vorteilhafterweise wird der Bereich der Näpfchentiefe der Gravur bzw. der Ätzung auf dem Tiefdruckzylinder gemäß nachstehender Formel und der gewählten Farbmittel/Bindemittelkonzentration eingestellt:

$$tN\ [\mu m] = 35/C_{FB}\ [Konz.-\%]\ bis\ 2000/C_{FB}[Konz.-\%]$$

Bevorzugt können Näpfchentiefenbereich und Druckfarbenkonzentration so aufeinander abgestimmt werden, daß die Näpfchentiefe $t_N$ [μm] in einem Bereich zwischen

$200/C_{FB}$ bis $1500/C_{FB}$ besonders bevorzugt zwischen

$500/C_{FB}$ bis $1100/C_{FB}$ je nach den drucktechnischen Erfordernissen variierbar ist.

Das erfindungsgemäße Verfahren weist daher die technischen Vorteile auf, daß a) unter Verwendung aller drucktechnischen Gestaltungsmöglichkeiten gearbeitet werden kann, und daß b) mit herkömmlichen bzw. nach üblichen Verfahren hergestellten Tiefdruckzylinder mit variabler Näpfchentiefe, daß c) unter Verwendung von Tiefdruckfarben, welche wäßrige Dispersionen von Farbmitteln, strahlenhärtbaren Bindemitteln, Dispergatoren und Photoinitiatoren, sowie sonst für die Tiefdrucktechnik üblichen Additiven darstellen, in üblicher Weise gedruckt wird und d) die Trocknung der Druckfarbe nach jedem Druckvorgang in zwei Schritten erfolgt, nämlich einerseits durch Verdampfen von überschüssigem, das heißt, vom Substrat nicht aufgenommenem Wasser und andererseits durch Polymerisation (Aushärtung) des Bindemittels durch aktinische Strahlung.

Besonders bevorzugt sind gravierte TD-Zylinder.

Das erfindungsgemäße Verfahren kann zur Bedruckung aller üblichen Substrate (Materialien) wie Papier, Kunststoff, vorzugsweise (zur Haftungsverbesserung) vorlackierter Kunststoff, Metall und vorzugsweise vorlackiertes Metall, eingesetzt werden.

Um wasserverdünnbar bzw. in Wasser dispergierbar zu sein, muß das Druckfarbensystem derart aufgebaut sein, daß die darin enthaltenen Bindemittel sowie Farbmittel in Wasser dispergierbar sind.

Die Wasserdispergierbarkeit des Bindemittelsystems wird dadurch erreicht, daß polymerisierbare Oligomere und/oder Präpolymere verwendet werden, welche hydrophile Gruppen aufweisen.

Die Wasserdispergierbarkeit der Farbmittel kann durch Wahl löslicher Farbstoffe und/oder geeigneter Zusatzstoffe, nämlich durch auf die Farbmittel abgestimmte Dispergatoren gesteuert werden. Es handelt sich dabei in der Regel um Stoffe, welche mit einem Molekülteil am Farbmittel adsorbiert werden, während der andere Molekülteil hydrophile Eigenschaften hat, sodaß stabile Dispersionen gebildet werden können.

Als Bindemittelkomponente kommen in Frage: radikalisch polymerisierbare (Meth)Acrylate in Form der entsprechechenden Oligo- bzw. Präpolymere, welche einen Anteil von 2 bis 20 Mol-%, vorzugsweise von 5 - 10 Mol-% an Carboxylgruppen aufweisen.

Diese polymerisierbaren (Meth)Acrylate bestehen vorzugsweise aus Acryl- und/oder Methacrylsäureeinheiten sowie aus den entsprechenden Hydroxyacrylaten, deren OH-Zahl in Verbindung mit der Anzahl an Carboxylgruppen eine analoge Hydrophilie und damit Wasser-Dispergierbarkeit bewirkt wie diejenige der vorgenannten rein carboxylischen (Meth)acrylate.

Als Hydroxyacrylate werden insbesondere Hydroxyethylacrylate und/oder Ester der (Meth)Acrylsäure mit mehrwertigen Alkohlen, bei welchen nicht alle OH-Funktionen verestert sind, eingesetzt.

Die radikalisch polymerisierbaren Bindemittelsysteme können auch Gemische sein aus einem oder mehreren Oligomeren bzw. Präpolymeren mit noch reaktiven Doppelbindungen sowie mit zusätzlichen Comonomeren wie Trimethylolpropan-Di- und Triacrylat (TMPDA, TMPTA) und/oder Di- oder Tripropylenglycoldiallyläther (DPGDA, TPGDA), Dipenta-erythritpenta- und/oder hexa-acrylat (DPEPA, DPEHA) und Neopentyl-glycoldiacrylat (NPGDA).

Ferner können die polymerisierbaren (Meth)acrylate Comonomere auf Basis von Maleinsäure, Ethylen, Vinylacetat sowie Comonomere mit funktionellen Epoxy- und/oder Urethangruppen aufweisen (= Epoxyacrylate und/oder Urethanacrylate).

Als besonders vorteilhaft hat sich der Einsatz eines Bindemittelsystems erwiesen, welches radikalisch polymerisierbare Doppelbindungen aus einpolymerisierten Allylacrylaten, Vinylacrylaten oder aus noch unreagierten Acrylgruppen von Acrylsäureestern auf Basis von mehrwertigen Alkoholen und/oder aus einkondensierter Malein-, Fumaroder Tetrahydrophthalsäure oder im Falle von Urethan-acrylaten aus Umsetzungsprodukten von Oligo- und/oder Polyhydroxyacrylaten mit einem Überschuß an Di- und/oder Polyisocyanaten, enthält, an deren freie Isocyanatgruppen wiederum Hydroxyacrylate addiert werden.

Für die Additionsreaktion erweisen sich sich Hydroxyacrylate wie Hydroxyethylacrylate und/oder Ester der (Meth)Acrylsäure mit mehrwertigen Alkoholen, bei welchen nicht alle OH-Funktionen verestert sind, als besonders geeignet.

Die Epoxygruppen-hältigen Comonomeren bestehen aus niedrigmolekularen, Epoxygruppen-hältigen Verbindungen wie beispielsweise Glycidylacrylat oder Gemische davon.

Der Anteil an radikalisch polymerisierbaren Gruppen im Bindemittelsystem liegt insgesamt zwischen 3 und 50 Mol-%, insbesondere zwischen 5 und 30 Mol-% (bezogen auf die formale Gesamtanzahl an reaktive Doppelbindungen aufweisenden Monomeren plus Monomereneinheiten in den Polymeren).

Das durch aktinische Strahlung polymerisierbare Bindemittelsystem kann statt eines radikalischen Systems ebenso ein ionisch polymerisierbares, insbesondere kationisch polymerisierbares Bindemittelsystem sein.

Als solche ionisch polymerisierbare Bindemittel kommen strahleninduziert härtbare - insbesondere kationisch polymerisierbare - Systeme infrage, wie dies der Fall bei epoxdischen Systemen ist, deren Polyermisation dadurch initiiert wird, daß infolge einer photochemischen Spaltung geeigneter Initiatormoleküle kationische Katalsysatoren wie Sulfonium-Verbindungen (Beispiel: Auf Triarylsulfonium-Phosphorhexafluorid) gebildet werden. Als epoxdische Komponente kommen infrage: Bekannte Epoxharze, aber auch Gemische derartiger Epoxharze mit niedrigmolekularen epoxdischen Verbindungen. Nachdem Epoxygruppen an sich bereits hydrophiler sind als rein acrylische Moleküle, so sind derartige Systeme an sich bereits leichter in Wasser dispergierbar. Die Wasser-Dispergierbarkeit kann noch weiter verbessert werden, wenn auch in solche Systeme hydrophile Gruppen eingebaut werden.

Der Anteil an aktiven Epoxy-Gruppen in solchen präpolymeren Systemen soll im Bereich zwischen 5 und 30 Mol-%, vorzugsweise zwischen 5 und 20 Mol-% liegen.

Die epoxdischen Bindemittelsysteme können auch Gemische der vorgenannten epoxdischen Oligo- bzw. Polymeren als "Präpolymere" im Gemisch mit 0 bis 30 Gew.-%, vorzugsweise 2 bis 10 Gew.-% niedrigmolekularer Epoxy-"Verdünner" wie Glycid ($_{\text{Äqu}}M_{EO} = 74$) oder vorzugsweise Glydicyläther wie Diglycidyläther (DGDE, $_{\text{Äqu}}M_{EO} = 130$) oder Glycidyläther mehrwertiger Phenole, sein; besonders bevorzugt sind jedoch epoxdische Präpolymere.

Der Gesamtanteil an aktiven Epoxygruppen im Bindemittelsystem soll einem Epoxyäquivalent der Bindemittelmischung entsprechen von $_{\text{Äqu}}M_{EO} = 50.000$ bis zu einem Epoxyäquivalent von $_{\text{Äqu}}M_{EO} = 300$, vorzugsweise im Bereich von $_{\text{Äqu}}M_{EO} = 500$ bis 10.000, insbesondere im Bereich von $_{\text{Äqu}}M_{EO} = 700$ bis 3000.

Besonders günstig haben sich Kombinationen von radikalisch härtenden Bindemittelsystemen mit kationisch härtenden Systemen erwiesen.

Insbesondere wenn in solchen sogenannten "Hybrid"-Systemen die Reaktionsgeschwindigkeiten so aufeinander abgestimmt sind, daß bei Einwirkung der aktinischen Strahlung die "Trocknung" startet; und anschließend aufgrund der Längerlebigkeit der Kationen im Vergleich zu den freien Radikalen die kationische Polymerisation die Resthärtung übernimmt, wobei diese auch noch nach Ende der Einwirkung der aktinischen Strahlung nachreagiert.

Für die Trocknung derartiger Druckfarben ist es besonders vorteilhaft, wenn bei Anwendung radikalisch polymerisierender Bindemittelsysteme nach der Entleerung der Näpfchen vom TD-Zylinder auf das Substrat zuerst das vom Substrat nicht aufnehmbare Wasser und alle Co-Löser physkalisch entfernt (verdampft) werden und erst dann durch Einwirkung der aktinischen Strahlung die Polymerisation gestartet wird.

Bei Anwendung ionisch polymerisierbarer Bindemittelsysteme oder von Hybridsystemen (worunter radikalisch und kationisch reagierende Systeme zu verstehen sind) ist es vorteilhaft, die Langlebigkeit der photoinitiiert entstehenden ionischen Polymerisationsstarter und deren Reaktionen in Wasser auszunutzen und daher die aktinische Strahlung direkt auf die noch nassen Drucke wirken zu lassen.

Besonders vorteilhaft ist es dabei, die Polymerisations-initiierende Wirkung der aktinischen Strahlung mit der physikalischen, Wasser verdampfenden Wirkung der Abwärme der Strahler zu kombinieren.

Ein Weg zur Ausführung der Erfindung

Die Erfindung wird nun anhand eines Ausführungsbeispieles näher erläutert:

Das erfindungsgemäße Druckfarbensystem wird als wäßrige Dispersion der Einzelkomponenten hergestellt, wobei 100 kg eines Druckfarbenvorkonzentrats (4,5 Gew-% Wassergehalt) in 110 kg Wasser dispergiert werden.

Dabei wird ein Bindemittelsystem bestehend zu 90 Gew-% aus einem Epoxyacrylat und zu 10 Gew-% aus Neopentylglycoldiacrylat eingesetzt.

Das Epoxyacrylat ist ein Gemisch, welches zu 60 Gew-% aus Acrylaten und zu 40 Gew.% aus nicht acrylischen Epoxgruppen-hältigen Verbindungen besteht.

Die Acrylate sind Präpolymere aufgebaut aus folgenden Monomeren: Acrylsäure-Glycid-Ester (5 Mol-%), Alkylacrylaten (40 Mol-% Äthylacrylat, 34 Mol-% Butylacrylat, 10 Mol-% 2-Äthylhexylacrylat und 10 Mol-% Allylacrylat), Acrylsäure (6 Mol-%) und einer untergeordneten Menge an Methylmethacrylat (5 Mol-%). Das mittlere Molekulargewicht pro Monomereinheit beträgt $M_{Mon}$ = 116,2, der Gehalt an freien Carboxylgruppen beträgt 6 Mol-%. Der Gehalt an Glycidylacrylat (5 Mol%) bewirkt ein Epoxyäquivalent von 2324.

Die nicht acrylische Epoxygruppen-hältige Verbindung ist ein handelsübliches, in Wasser dispergierbares Epoxyharz mit einem Epoxyäquivalent von $_{Äqu}M_{EO}$=1000.

Der Anteil an radikalisch polymerisierbaren Gruppen im Bindemittelsystem beträgt 10 Mol% aus den Allyleinheiten des Acrylats, beitragend mit formal 10x0,6 = 6 Mol% im Gemisch mit dem Epoxyharz plus 200 Mol% aus dem NPGDA, d.s. insgesamt formal 6x0,9+200x0,1 = 25,4 Mol%.

Der Gehalt an Bindemittelsystem beträgt insgesamt in der Dispersion 30 Gew-%; das mittlere Epoxyäquivalent ($_{Äqu}M_{EO}$) im Bindemittelsystem beträgt (0,6x2324+0,4x1000=) 1794.

Neben dem Bindemittelsystem enthält das erfindungsgemäße Druckfarbensystem 10 Gew-% Irgalith-Blau als Pigment sowie 0,5 Gew-% eines nichtionischen Fettalkohol-Polyäthylenoxyd-Tensids als Pigment-Dispergator, 2 Gew-% ESACURE KTO46 als radikalischer Photoinitiator, 3 Gew-% Triarylsulfonium-Phosphorhexafluorid als kationischer Photoinitiator. Der auf 100 Gew.% zu ergänzende Gewichtsanteil ist Wasser. Die Farbmittel-Bindemittel-Konzentration der Druckfarbe beträgt somit 40 Gew.-%, d.s. bei der Dichte der Druckfarbe von 1,03 g/cm$^3$ ein $C_{FB}$ = 41,2 Konz-%.

Anschließend wird das erfindungsgemäße Druckfarbensystem in das Druckwerk einer Tiefdruckmaschine (ROTOPAC) gefüllt, welche unmittelbar nach dem Druckzylinder über der Substratbahn in einem Abstand von 2 mm mit zwei UV-Strahlungsquellen ausgerüstet ist. Die Leistung der UV-Strahlungsquellen beträgt je 160 W/cm.

Das zu bedruckende Substrat kann beispielsweise ein mit Polyurethanacrylatlack vorlackiertes und vor dem Bedrucken mit Corona-Entladung vorbehandeltes Aluminiumband sein.

Dieses Substrat wird über einen Tiefdruckzylinder geführt, dessen Näpfchentiefe je nach gewünschter Farbtiefe und entsprechend dem besonders bevorzugten Bereich des Produktes $C_{FB}$x$t_N$ = 500 - 1100, also $t_N$ = 500/41,2 = 12,1 bis 1100/41,2 = 26,7 variierbar eingestellt ist.

Nach dem Druckfarbenauftrag erfolgt durch die UV-Bestrahlung die Polymerisierung der reaktiven Gruppen im Bindemittelsystem. Anschließend wird das bedruckte Substrat mit einer Geschwindigkeit von 160 m/min über ein zweites Druckwerk geführt, an welchem beispielsweise ein gelber Farbton mit einer herkömmlichen Lösemittel-basierten Tiefdruckfarbe dazu- und auch teilweise über den ersten Druck aufgetragen wird.

Anschließend erfolgt die Endtrocknung in einem 6 m langen, auf 200°C geheizten Trockentunnel.

Es wurde ein unverwischter, Kanten-sauberer und auch an den überdruckten Flächen in design-gerechtem Farbton erscheinender Druck erhalten, der auch nach dem "15 mm-Tesabandtest" einwandfreie Haftung aufweist.

**Patentansprüche**

**1.** Verfahren zur Herstellung von nach dem Rotationstiefdruckverfahren bedruckten Substraten dadurch gekennzeichnet, daß ein wasserverdünnbares Druckfarbensystem eingesetzt wird, welches 2 - 30 Gew.-%, vorzugsweise 5 - 20 Gew.-% Farbmittel, 5 - 45 Gew.-%, vorzugsweise 10 - 35 Gew.-% eines Bindemittelsystems, welches durch aktinische Strahlung polymerisierbar ist, 0 - 10 Gew.-%, vorzugsweise 1 - 5 Gew.-% radikalische und/oder kationische Photoinitiatoren sowie 0 - 5 Gew.-%, vorzugsweise 0,5 - 3 Gew.-% Zusatzstoffe sowie 0 - 10 Gew.-%, vorzugsweise 0 Gew.-% Co-Löser sowie zusätzlich Wasser enthält, und daß dieses wasserverdünnbare Druckfarbensystem mittels eines gravierten oder geätzten Tiefdruckzylinders, dessen für die Farbaufnahme vorgesehenen Näpfchen in ihrer Größe und Tiefe dem jeweils gewünschten Druckbild und der eingestellten Farbmittel/Bindemittel-Konzentration angepaßt sind, auf das zu bedruckende Substrat aufgebracht wird, daß anschließend das aufgetragene Druckfarbensystem durch Strahlungsquellen unter Polymerisation des Bindemittels getrocknet wird, sodaß gegebenenfalls auf die erste Druckfarbenschicht unmittelbar eine zweite Druckfarbenschicht aufgetragen werden kann.

2. Verfahren nach Anspruch 1, dadurch gekennzeichnet, daß der Bereich der Näpfchentiefe (tN) der Gravur bzw. der Ätzung auf dem Tiefdruckzylinder gemäß nachstehender Formel und der gewählten Farbmittel/Bindemittel-Konzentration variiert wird:

$$tN \ [\mu m] = 35/C_{FB} \ [Konz.\text{-}\%] \ \text{bis} \ 2000/C_{FB}[Konz.\text{-}\%]$$

$C_{FB}$ = Gramm (Farbmittel + Bindemittel) pro 100 ml Druckfarbe.

3. Verfahren nach Anspruch 2, dadurch gekennzeichnet, daß der Bereich der Näpfchentiefe der Gravur bzw. der Ätzung auf dem Tiefdruckzylinder gemäß nachstehender Formel und der gewählten Farbmittel/Bindemittel-Konzentration variiert wird:

$$tN \ [\mu m] = 200/C_{FB} \ [Konz.\%] \ \text{bis} \ 1500/C_{FB} \ [Konz.\%]$$

4. Verfahren nach Anspruch 2, dadurch gekennzeichnet, daß der Bereich der Näpfchentiefe der Gravur bzw. der Ätzung auf dem Tiefdruckzylinder gemäß nachstehender Formel und der gewählten Farbmittel/Bindemittel-Konzentration variiert wird:

$$tN \ [\mu m] = 500/C_{FB} \ [Konz.\%] \ \text{bis} \ 1100/C_{FB} \ [Konz.\%]$$

5. Verfahren nach einem der Ansprüche 1 bis 4, dadurch gekennzeichnet, daß das durch aktinische Strahlung polymerisierbare Bindemittelsystem einen Anteil an radikalisch polymerisierbaren Gruppen im Bindemittelsystem von 3 bis 50 Mol-%, insbesondere von 5 bis 30 Mol-%, aufweist.

6. Verfahren nach einem der Ansprüche 1 bis 5, dadurch gekennzeichnet, daß das durch aktinische Strahlung polymerisierbare Bindemittelsystem aus radikalisch polymerisierbaren (Meth)Acrylaten in Form der entsprechenden Oligo- bzw. Präpolymere mit einem Anteil von 2 bis 20 Mol-%, vorzugsweise von 5 - 10 Mol-% an Carboxylgruppen besteht.

7. Verfahren nach Anspruch 6, dadurch gekennzeichnet, daß die polymerisierbaren (Meth)Acrylate aus Acryl- und/oder Methacrylsäureeinheiten sowie aus den entsprechenden Hydroxyacrylaten bestehen, deren OH-Zahl in Verbindung mit der Anzahl an Carboxylgruppen eine analoge Hydrophilie und damit Wasser-Dispergierbarkeit bewirkt wie diejenige der vorgenannten rein carboxylischen (Meth)acrylate bzw. die ganze der teilweise zu Urethan-acrylaten umgesetzt sind.

8. Verfahren nach Anspruch 7, dadurch gekennzeichnet, daß als Hydroxyacrylate Hydroxyethylacrylate und/oder Ester der (Meth)Acrylsäure mit mehrwertigen Alkohlen, bei welchen nicht alle OH-Funktionen verestert sind, eingesetzt werden.

9. Verfahren nach Anspruch 7, dadurch gekennzeichnet, daß die polymerisierbaren (Meth)acrylate Comonomere auf Basis von Maleinsäure, Ethylen, Ethylenvinylacetat sowie Comonomere mit funktionellen Epoxy- und/oder Urethangruppen enthalten.

**10.** Verfahren nach einem der Ansprüche 1 - 9, dadurch gekennzeichnet, daß das polymerisierbare Bindemittelsystem radikalisch polymerisierbare Doppelbindungen enthält, welche aus einpolymerisierten Allylacrylaten, Vinylacrylaten oder noch unreagierten Acrylgruppen aus Acrylsäureestern auf Basis von mehrwertigen Alkoholen und/oder aus einkondensierter Malein-, Fumar- oder Tetrahydrophthalsäure oder im Falle von Urethanacrylaten aus Umsetzungsprodukten von Oligo- und/oder Polyhydroxyacrylaten mit einem Überschuß an Di- und/oder Polyisocyanaten, an deren freie Isocyanatgruppen wiederum Hydroxyacrylate addiert werden, stammen.

**11.** Verfahren nach Anspruch 10, dadurch gekennzeichnet, daß das Bindemittelsystem Gemische aus einem oder mehreren Oligomeren bzw. Präpolymeren wie Trimethylolpropan-Di- und Triacrylat (TMPDA, TMPTA) und/ oder Di- oder Tripropylenglycoldiallyläther (DPGDA, TPGDA), Dipentaerythritpenta- und/oder hexa-acrylat (DPEPA, DPEHA) sowie Neopentyl-glycoldiacrylat (NPGDA) enthält.

**12.** Verfahren nach einem der Ansprüche 1 bis 4, dadurch gekennzeichnet, daß das durch aktinische Strahlung polymerisierbare Bindemittelsystem aus ionisch polymerisierbaren Epoxy-Verbindungen besteht.

**13.** Verfahren nach Anspruch 12, dadurch gekennzeichnet, daß der Anteil an aktiven Epoxy-Gruppen im ionisch polymerisierbaren Präpolymerensystem zwischen 5 und 30 Mol-%, vorzugsweise zwischen 5 und 20 Mol-% liegt, wobei der Gesamt-Anteil an aktiven Epoxygruppen der Bindemittelmischung einem Epoxyäquivalent in einem Bereich von ÄquMEO = 50.000 bis zu ÄquMEO = 300, vorzugsweise im Bereich von ÄquMEO = 500 bis 10.000, insbesondere im Bereich von ÄquMEO = 700 bis 3000 entspricht.

**14.** Wasserverdünnbares Druckfarbensystem nach Anspruch 12 oder 13, dadurch gekennzeichnet, daß das ionisch polymerisierbare Bindemittelsystem ein kationisch polymerisierbares Bindemittelsystem ist.

**15.** Verfahren nach einem der Ansprüche 1 bis 4, dadurch gekennzeichnet, daß das durch aktinische Strahlung polymerisierbare Bindemittelsystem sowohl radikalisch als auch kationisch polymerisierbar ist.

**16.** Wasserverdünnbares Druckfarbensystem nach Anspruch 15, dadurch gekennzeichnet, daß das Bindemittelsystem im wesentlichen aus einem Epoxyacrylat besteht.

**17.** Wasserverdünnbares Druckfarbensystem nach Anspruch 15, dadurch gekennzeichnet, daß das Bindemittelsystem ein Gemisch aus Monomeren, Oligo- und Präpolymeren auf Basis von Acrylaten und Epoxy-Verbindungen, vorzugsweise Epoxyharzen ist.

**18.** Wasserverdünnbares Druckfarbensystem nach Anspruch 15, dadurch gekennzeichnet, daß das Epoxyäquivalent in einem Bereich von ÄquMEO = 500 bis 3000, insbesondere im Bereich von ÄquMEO = 700 bis 2000 liegt.

**Claims**

**1.** Process for the production of substrates printed in accordance with the rotary intaglio printing process, characterised in that a water-dilutable printing ink system is used which contains from 2 to 30% by weight, preferably from 5 to 20% by weight of colouring agent, from 5 to 45% by weight, preferably from 10 to 35% by weight of a binder system which is polymerisable by actinic radiation, from 0 to 10% by weight, preferably from 1 to 5% by weight of radical and/or cationic photoinitiators and from 0 to 5% by weight, preferably from 0.5 to 3% by weight of additives and from 0 to 10% by weight, preferably 0% by weight of co-dissolvers and, in addition, water, in that the water-dilutable printing ink system is applied to the substrate to be printed by means of an engraved or etched intaglio cylinder of which the wells provided for receiving the ink are adapted in size and depth to the particular printing format desired and to the adjusted colouring agent/binder concentration, and in that the applied printing ink system is subsequently dried by radiation sources, with polymerisation of the binder, so that a second printing ink layer can optionally be applied immediately to the first printing ink layer.

**2.** Process according to claim 1, characterised in that the range of the well depth (tN) of the engraving or etching on the intaglio cylinder is varied in accordance with the following formula and the selected colouring agent/binder concentration:

$$tN\ [\mu m] = 35/C_{FB}\ [conc.\ \%]\ to\ 2000/C_{FB}\ [conc.\ \%]$$

$C_{FB}$ = gram (colouring agent + binder) per 100 ml of printing ink.

3.  Process according to claim 2, characterised in that the range of the well depth of the engraving or the etching on the intaglio cylinder is varied in accordance with the following formula and the selected colouring agent/binder concentration:

$$tN\ [\mu m] = 200/C_{FB}\ [\text{conc. \%}] \text{ to } 1500/C_{FB}\ [\text{conc. \%}].$$

4.  Process according to claim 2, characterised in that the range of the well depth of the engraving or the etching on the intaglio cylinder is varied in accordance with the following formula and the selected colouring agent/binder concentration:

$$tN\ [\mu m] = 500/C_{FB}\ [\text{conc. \%}] \text{ to } 1100/C_{FB}\ [\text{conc. \%}].$$

5.  Process according to any one of claims 1 to 4, characterised in that the binder system polymerisable by actinic radiation has a content of radically polymerisable groups in the binder system of from 3 to 50 mol %, especially from 5 to 30 mol %.

6.  Process according to any one of claims 1 to 5, characterised in that the binder system polymerisable by actinic radiation comprises radically polymerisable (meth)acrylates in the form of the corresponding oligo- or prepolymers having a content of from 2 to 20 mol %, preferably from 5 to 10 mol % of carboxyl groups.

7.  Process according to claim 6, characterised in that the polymerisable (meth)acrylates comprise acrylic and/or methacrylic acid units and the corresponding hydroxy acrylates, the OH number of which in conjunction with the number of carboxyl groups brings about a similar hydrophilicity and thus water-dispersibility to that of the above-mentioned purely carboxylic (meth)acrylates or all or some of which are reacted to form urethane acrylates.

8.  Process according to claim 7, characterised in that hydroxyethyl acrylates and/or esters of (meth)acrylic acid with polyhydric alcohols, in the case of which not all of the OH functions have been esterified, are used as hydroxy acrylates.

9.  Process according to claim 7, characterised in that the polymerisable (meth)acrylates contain comonomers based on maleic acid, ethylene, ethylene vinyl acetate, and comonomers with functional epoxy and/or urethane groups.

10. Process according to any one of claims 1 to 9, characterised in that the polymerisable binder system contains radically polymerisable double bonds which originate from vinyl acrylates, allyl acrylates, incorporated by polymerisation, or still unreacted acrylic groups from acrylic acid esters based on polyhydric alcohols and/or from maleic, fumaric or tetrahydrophthalic acid incorporated by condensation or, in the case of urethane acrylates, from reaction products of oligo- and/or polyhydroxy acrylates with an excess of di- and/or polyisocyanates, to the free isocyanate groups of which hydroxy acrylates are again added.

11. Process according to claim 10, characterised in that the binder system contains mixtures of one or more oligomers or prepolymers, such as trimethylol propane di- and triacrylate (TMPDA, TMPTA) and/or di- or tripropylene glycol diallyl ether (DPGDA, TPGDA), dipentaerythritol penta- and/or hexa-acrylate (DPEPA, DPEHA) and neopentyl glycol diacrylate (NPGDA).

12. Process according to any one of claims 1 to 4, characterised in that the binder system polymerisable by actinic radiation comprises ionically polymerisable epoxy compounds.

13. Process according to claim 12, characterised in that the content of active epoxy groups in the ionically polymerisable prepolymer system is between 5 and 30 mol %, preferably between 5 and 20 mol %, the total content of active epoxy groups of the binder mixture corresponding to an epoxy equivalent in a range of equMEO = 50,000 to equMEO = 300, preferably in the range of equMEO = 500 to 10,000, especially in the range of equMEO = 700 to 3,000.

14. Water-dilutable printing ink system according to claim 12 or 13, characterised in that the ionically polymerisable binder system is a cationically polymerisable binder system.

15. Process according to any one of claims 1 to 4, characterised in that the binder system polymerisable by actinic radiation is both radically and cationically polymerisable.

16. Water-dilutable printing ink system according to claim 15, characterised in that the binder system consists substantially of an epoxy acrylate.

17. Water-dilutable printing ink system according to claim 15, characterised in that the binder system is a mixture of monomers, oligo- and prepolymers based on acrylates and epoxy compounds, preferably epoxy resins.

18. Water-dilutable printing ink system according to claim 15, characterised in that the epoxy equivalent is in a range of equMEO = 500 to 3,000, especially in the range of equMEO = 700 to 2,000.

**Revendications**

1. Procédé de préparation de supports imprimés suivant le procédé d'impression en héliogravure par rotative, **caractérisé** en ce que l'on utilise un système pour encre d'impression, diluable par de l'eau, qui contient 2 à 30 % en poids, de préférence 5 à 20 % en poids, de colorant, 5 à 45 % en poids, de préférence 10 à 35 % en poids, d'un système constituant un liant qui est polymérisable par des rayons actiniques, 0 à 70 % en poids, de préférence 1 à 5 % en poids, d'excitant photo, radicalaire et/ou cationique, ainsi que 0 à 5 % en poids, de préférence 0,5 à 3 % en poids, d'additif, 0 à 10 % en poids, de préférence 0 % en poids, de cosolvant et de l'eau complémentaire, et en ce que ce système pour encre d'impression, diluable par de l'eau, est appliqué sur le support à imprimer au moyen d'un cylindre d'impression en héliogravure, gravé ou gravé chimiquement, dont les creux prévus pour la réception de la couleur sont adaptés par leur taille et leur profondeur à l'image imprimée souhaitée et à la concentration ajustée du colorant et du liant, et le système pour encre d'impression appliqué est ensuite séché par polymérisation du liant au moyen de sources de rayonnement, de telle manière que l'on peut éventuellement appliquer directement une deuxième couche d'encre d'impression sur la première couche d'encre d'impression.

2. Procédé selon la revendication 1, **caractérisé** en ce que le domaine de profondeur des creux ($t_n$) de la gravure ou de la gravure chimique pratiquée sur le cylindre d'impression en héliogravure varie en fonction de la concentration choisie pour le colorant et le liant, conformément à la formule suivante :

$$t_n \ (\mu m) = 35/C_{FB} \ (\text{concentration en \%}) \ \text{à} \ 2000/C_{FB} \ (\text{concentration en \%})$$

$C_{FB}$ = grammes de (colorant + liant) pour 100 ml d'encre d'impression.

3. Procédé selon la revendication 2, **caractérisé** en ce que le domaine de profondeur des creux de la gravure ou de la gravure chimique pratiquée sur le cylindre d'impression en héliogravure varie en fonction de la concentration choisie pour le colorant et le liant, conformément à la formule suivante :

$$t_n \ (\mu m) = 200/C_{FB} \ (\text{concentration en \%}) \ \text{à} \ 1500/C_{FB} \ (\text{concentration en \%})$$

4. Procédé selon la revendication 2, **caractérisé** en ce que le domaine de profondeur des creux de la gravure ou de la gravure chimique pratiquée sur le cylindre d'impression en héliogravure varie en fonction de la concentration choisie pour le colorant et le liant, conformément à la formule suivante :

$$t_n \ (\mu m) = 500/C_{FB} \ (\text{concentration en \%}) \ \text{à} \ 1100/C_{FB} \ (\text{concentration en \%})$$

5. Procédé selon l'une quelconque des revendications 1 à 4, **caractérisé** en ce que le système constituant un liant polymérisable par des rayons actiniques présente dans le liant une proportion de groupes polymérisables par voie radicalaire égale à 3 à 50 % en moles, en particulier à 5 à 30 % en moles.

**6.** Procédé selon l'une quelconque des revendications 1 à 5, **caractérisé** en ce que le système constituant un liant polymérisable par des rayons actiniques est constitué d'acrylates ou méthacrylates polymérisables par voie radicalaire, sous la forme des oligomères ou prépolymères correspondants, ayant une part en groupes carboxyles de 2 à 20 % en moles, de préférence de 5 à 10 % en moles.

**7.** Procédé selon la revendication 6, **caractérisé** en ce que les acrylates ou méthacrylates polymérisables sont constitués d'unités d'acide acrylique et/ou d'acide méthacrylique ainsi que des hydroxyacrylates correspondants, dont l'indice de OH, en combinaison avec la quantité en groupes carboxyles, entraîne une nature hydrophile et donc une dispersabilité dans l'eau analogue à celle des acrylates ou méthacrylates purement carboxyliques, précédemment désignés, ou ceux qui sont transformés totalement ou partiellement en uréthane-acrylates.

**8.** Procédé selon la revendication 7, **caractérisé** en ce que l'on utilise comme hydroxyacrylate, l'acrylate d'hydroxyéthyle et/ou un ester de l'acide acrylique ou de l'acide méthacrylique avec un alcool polyhydroxylé dont toutes les fonctions OH ne sont pas estérifiées.

**9.** Procédé selon la revendication 7, **caractérisé** en ce que les acrylates ou méthacrylates polymérisables contiennent des comonomères à base d'acide maléique, d'éthylène ou d'acétate de vinyle, ainsi que des comonomères possédant des groupes fonctionnels époxy et/ou uréthanes.

**10.** Procédé selon l'une quelconque des revendications 1 à 9, **caractérisé** en ce que le système constituant un liant polymérisable contient des doubles liaisons polymérisables par voie radicalaire, qui proviennent d'acrylates d'allyle ou d'acrylates de vinyle copolymérisés ou de groupes acryliques n'ayant pas encore réagi d'esters de l'acide acrylique avec des alcools polyhydroxylés, et/ou d'acide maléique, d'acide fumarique ou d'acide tétrahydrophtalique copolymérisé, ou, dans le cas d'uréthane-acrylates, de produits de réaction d'oligo- et/ou polyhydroxyacrylates avec un excès de di- et/ou polyisocyanates, auxquels sont ajoutés de nouveau des hydroxyacrylates exempts de groupes isocyanates.

**11.** Procédé selon la revendication 10, caractérisé en ce que le système constituant un liant contient un mélange d'un ou plusieurs oligomères ou prépolymères et de di- ou triacrylate de triméthylolpropane (TMPDA, TMPTA) et/ou d'éther diallylique de di- ou tripropylèneglycol (DPGDA, TPGDA), de penta-acrylate et/ou d'hexa-acrylate de dipentaérythritol (DPEPA, DPEHA) ainsi que de diacrylate de néopentylglycol (NPGDA).

**12.** Procédé selon l'une quelconque des revendications 1 à 4, caractérisé en ce que le système constituant un liant polymérisable par des rayons actiniques est constitué de composés époxy polymérisables par voie ionique.

**13.** Procédé selon la revendication 12, caractérisé en ce que la proportion de groupes époxy actifs du système de prépolymères polymérisable par voie ionique se situe entre 5 et 30 % en moles, de préférence entre 5 et 20 % en moles, la proportion totale de groupes époxy actifs du mélange constituant le liant correspondant à un équivalent époxy qui est compris dans l'intervalle allant de EquMEO = 50 000 à EquMEO = 300, de préférence dans l'intervalle allant de EquMEO = 500 à EquMEO = 10 000, et en particulier dans l'intervalle allant de EquMEO = 700 à EquMEO = 3000.

**14.** Système pour encre d'impression diluable par de l'eau selon la revendication 12 ou 13, caractérisé en ce que le système constituant un liant polymérisable par voie ionique est un système constituant un liant polymérisable par voie cationique.

**15.** Procédé selon l'une quelconque des revendications 1 à 4, caractérisé en ce que le système constituant un liant polymérisable par des rayons actiniques est polymérisable aussi bien par voie radicalaire que par voie cationique.

**16.** Système pour encre d'impression diluable par de l'eau selon la revendication 15, caractérisé en ce que le système constituant un liant est constitué essentiellement d'un époxyacrylate.

**17.** Système pour encre d'impression diluable par de l'eau selon la revendication 15, caractérisé en ce que ledit système constituant un liant est un mélange de monomères, d'oligomères et de prépolymères, à base d'acrylates et de composés époxy, de préférence de résines époxy.

**18.** Système pour encre d'impression diluable par de l'eau selon la revendication 15, caractérisé en ce que l'équivalent époxy est situé dans l'intervalle allant de EquMEO = 500 à EquMEO = 3000, en particulier dans l'intervalle allant de EquMEO = 700 à EquMEO = 2000.